(19) **Europäisches Patentamt**
**European Patent Office**
**Office européen des brevets**

(11) **EP 1 611 465 B1**

(12) **EUROPEAN PATENT SPECIFICATION**

(45) Date of publication and mention
of the grant of the patent:
**27.04.2016 Bulletin 2016/17**

(21) Application number: **04757905.7**

(22) Date of filing: **19.03.2004**

(51) Int Cl.:
*G02B 6/26* (2006.01)          *F03G 7/00* (2006.01)
*F02C 7/045* (2006.01)          *G02B 26/08* (2006.01)

(86) International application number:
**PCT/US2004/008495**

(87) International publication number:
**WO 2004/086100 (07.10.2004 Gazette 2004/41)**

(54) **METHOD AND APPARATUS FOR CONVERTING OR OTHERWISE UTILIZING RADIATION PRESSURE TO GENERATE MECHANICAL WORK**

VERFAHREN UND VORRICHTUNG ZUM UMWANDELN ODER ANDERWEITIGEN VERWENDEN VON STRAHLUNGSDRUCK ZUR ERZEUGUNG MECHANISCHER ARBEIT

METHODE ET APPAREIL POUR CONVERTIR OU POUR UTILISER UNE PRESSION DE RAYONNEMENT POUR GENERER UN TRAVAIL MECANIQUE

(84) Designated Contracting States:
**AT BE BG CH CY CZ DE DK EE ES FI FR GB GR HU IE IT LI LU MC NL PL PT RO SE SI SK TR**

(30) Priority: **19.03.2003 US 393114**

(43) Date of publication of application:
**04.01.2006 Bulletin 2006/01**

(60) Divisional application:
**11171980.3 / 2 385 251**

(73) Proprietor: **Spacedesign Corporation**
**Houston, TX 77251-1045 (US)**

(72) Inventor: **CLAY, Joseph, M.**
**Houston, TX 77019 (US)**

(74) Representative: **Merryweather, Colin Henry**
**J A Kemp**
**14 South Square**
**Gray's Inn**
**London WC1R 5JJ (GB)**

(56) References cited:
**GB-A- 2 276 488      GB-A- 2 352 320**
**US-A- 3 067 572      US-A- 3 649 105**
**US-A- 5 455 709**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims the benefit of the filing date of United States Utility Application Serial No. 10/393, filed on March 19, 2003 (now pending). The above application is hereby incorporated by reference for all purposes and made a part of the present disclosure.

The present invention relates generally to a method and apparatus for harnessing the energy present in an electromagnetic light wave and converting this energy to a form of work, for example, mechanical work. The invention also relates to a method and apparatus for communicating or otherwise manipulating the light wave.

GB 2 276 488 A provides a device which, by forming two adjacent Casimir cavities and repeatedly switching the central partition from a conducting or reflecting state to a nonconducting or non-reflecting state and back again by the application of sound waves or a magnetic field or some other suitable method, will produce an oscillating force normal to the plane of the surfaces. This oscillating force may be used to generate a net energy output.

US 3, 649,105 discloses a wedge of transparent material having a first and second angularly displaced face positioned in a controllable manner with respect to a right angle prism with one of the faces of the wedge parallel to the hypotenuse face of the prism. A piezoelectric element is positioned to drive the wedge relative to the prism between a first position where in the wedge and prism are in near optical contact and a second position wherein the wedge and prism are spaced by a distance of about one wavelength of the light incident upon the prism so as to switch the optical path of the incident light beam from a condition of transmission to a condition of reflection at the hypotenuse face.

According to an aspect of the present invention, there is provided an apparatus for utilizing radiation pressure provided by a light wave to generate mechanical work, said apparatus comprising:

> a collector configured to collect light waves from an external source;
> a containment chamber constructed to receive collected light waves and contain the propagation of light waves therein along a predetermined reflected light wave path;
> a receiving prism positioned adjacent said containment chamber and positioned to receive a light wave from the collector prior to introduction of the light wave into said containment chamber;
> a first reflective mirror positioned at one end of said containment chamber, said first reflective mirror having a first reflective surface and being moveable along a predetermined mirror path; and
> a second reflective mirror having a second reflective surface positioned at a second end of said containment chamber, wherein
> the predetermined light wave path extends between said first and second reflective surfaces and wherein repeated contact of the light wave against the first reflective surface allows radiation pressure repeatedly acting upon the first reflective surface to cause the first reflective mirror to travel along the predetermined mirror path, thereby generating mechanical work.

Thus, in one aspect of the present invention, a method and apparatus are provided for utilizing radiation pressure provided by a light wave to generate mechanical work. The method includes the steps of providing a containment chamber for containing propagation of a light wave and then positioning, in a first location of the containment chamber, a movable reflective mirror having a first reflective surface. A light wave is introduced into the containment chamber and directed in the direction of the reflective surface. As a result, the light wave contacts the reflective surface and causes radiation pressure to act thereon.

In a further aspect of the invention, an apparatus is provided for utilizing radiation pressure provided by a light wave to generate mechanical work. The apparatus also includes a containment chamber constructed to contain the propagation of light waves therein along a predetermined reflected light wave path. The apparatus further includes an optic switch selectively operable in an open mode and a closed mode, wherein the open mode allows a light wave to enter the containment chamber and the closed mode prevents escape of the light wave from the containment chamber. Further, the apparatus has a reflective mirror positioned at one end of the containment chamber and second reflective surface positioned at a second end of the containment chamber. The reflective surfaces are positioned so that the predetermined light path extends between the first and second reflective surfaces. The apparatus operates so that repeated contact of the light path against the first reflective surface allows radiation pressure repeatedly acting upon the first reflective surface to cause the movable reflective mirror to travel along a predetermined path. In this way, mechanical work is generated.

In another aspect of the present invention, a method and apparatus are provided for communicating and/otherwise manipulating light waves. According to one method, a light wave is captured and then intensified. Preferably, the light wave is split by operation of a light multiplier or a light wave intensifier according to the invention.

In another aspect of the invention, a method and apparatus are provided for communicating a light wave by and/or through an interface. More specifically, the invention provides a method and apparatus of operating, *i.e.*, switching, the interface between an open or closed (or transparent or reflective state or mode). Preferably, the switching operation entails manipulating the total index of interaction of the interface. In the preferred mode, the method involves eliminating the boundary interface by way of compression.

In a preferred embodiment, the inventive apparatus utilizes at least one prism as a light switch and a containment chamber including one or more highly reflective mirrors to reflect propagating light waves in the chamber. In one operative mode, the mirrors absorb radiation pressure and reflect light, thereby converting some of the light energy in the containment chamber into mechanical energy and/or generating work. In one embodiment, the inventive method involves positioning at least two prisms adjacent to one another and by effecting compression between two adjacent faces or walls thereby reduce or eliminate the reflective optical interface between the two, thereby allowing light radiation to pass through as if there were no interface.

In another aspect of the invention, a method is provided for utilizing radiation pressure provided by a light wave to generate mechanical work. The inventive method includes the initial step of providing a containment chamber for containing propagation of a light wave and positioning, in a first location of the containment chamber, a movable reflective mirror having a first reflective surface. Then, a second reflective surface is positioned in a second location in the containment chamber, whereby the locations and orientations of the first and second reflective surfaces are predetermined to define, at least partially, a predetermined reflective light path. The method then provides for the step of introducing a light wave into the containment chamber. This introducing step includes directing the introduced light wave in the direction of one of the reflective surfaces, thereby causing the light wave to propagate between the first and second reflective surfaces along a predetermined light path for a plurality of cycles. According to the method, the light wave contacts the first reflective surface and causes radiation pressure to act on the first reflective surface, and then reflects against the initial reflective surface at a generally normal angle.

Preferably, the method further includes repeating the introducing step with respect to another light wave, whereby repeated contact of the first reflective surface with the light wave causes radiation pressure to move the first reflective surface along a predetermined path. More preferably, the positioning step also includes the step of positioning a second movable reflective mirror in the containment chamber, the second reflective mirror having the second reflective surface, and the step of directing the introduced light wave causes the light wave to repeatedly contact the second reflective surface and radiation pressure to repeatedly act upon the second reflective surface, thereby effecting travel of the second reflective surface along a second predetermined path and producing mechanical work.

Most preferably, the method also includes the step of providing a prism and positioning the prism such that the prism volume forms a portion of the containment chamber and at least one face of the prism forms a boundary of the containment chamber. Thus, the introducing step includes directing the light wave into the prism through the one face.

In one embodiment, the light wave or light beam is directed into a first or primary prism, prior to introduction into the containment chamber. Within the primary prism, the light beam is split (preferably, by operation of a light multiplier) multiple times and redirected upon itself (which compresses the beam length). In this way, the intensity of the light wave introduced into the containment chamber is increased, preferably to a predetermined level.

These and other features and advantages of the present invention will be apparent to those skilled in the art from the following Detailed Description of preferred embodiments, and the drawings which:

FIG. 1 is simplified schematic of an apparatus, such as a photon engine, for utilizing radiation pressure associated with light waves to generate mechanical work, according to the present invention;

FIG. 1a is a detail illustration of a compression boundary interface in the close mode, according to the invention;

FIG. 1b is a detail illustration of the compression boundary interface in the open mode, according to the invention;

FIG. 2 is a simplified schematic of one embodiment of a piston assembly suitable for use with the inventive apparatus;

FIG. 3 is a simplified schematic of an alternative embodiment of a photon engine according to the present invention;

FIGS. 4a and 4b are illustrations of prisms that may be used in conjunction with a photon engine according to the present invention;

FIG 5 is a simplified schematic of yet another embodiment of the inventive apparatus; and

FIG. 6a is a simplified plan view schematic illustrating an alternative apparatus and a method of operating the apparatus, according to the invention;

FIG. 6b is a side elevation view of the apparatus in FIG. 6a;

FIG. 7a is a simplified schematic illustrating an alternative primary prism and secondary prism of a photo engine, according to the present invention; and

FIG. 7b is a detailed cross-section of a light expander/contractor as shown in FIG. 7a, according to the invention;

FIG. 7c is a plan view of the light expander/contractor of FIG. 7a, according to the invention;

FIG. 7d is a schematic view illustrating operation of the light expander/contractor, according to the invention;

FIG. 7e is a simplified illustration of operation of the light expander of the primary prism, according to the invention;

FIG. 7f is a simplified illustration of operation of the light contractor of the primary prism, according to the invention;

FIG. 7g is a simplified illustration of operation of the primary and secondary prisms, according to the invention; and

FIG. 7h is a plan view of a light beam pattern resulting from operation of the light expander/contractor, according to the invention.

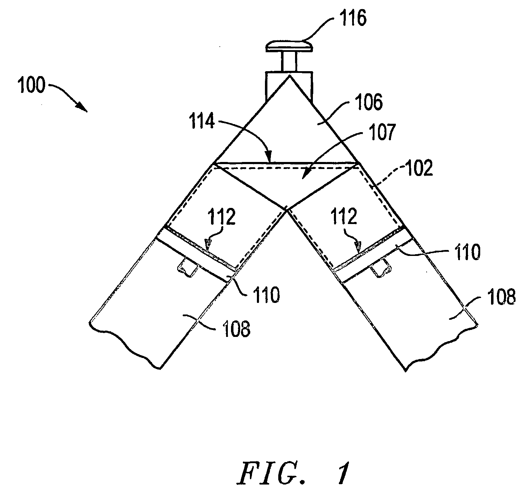

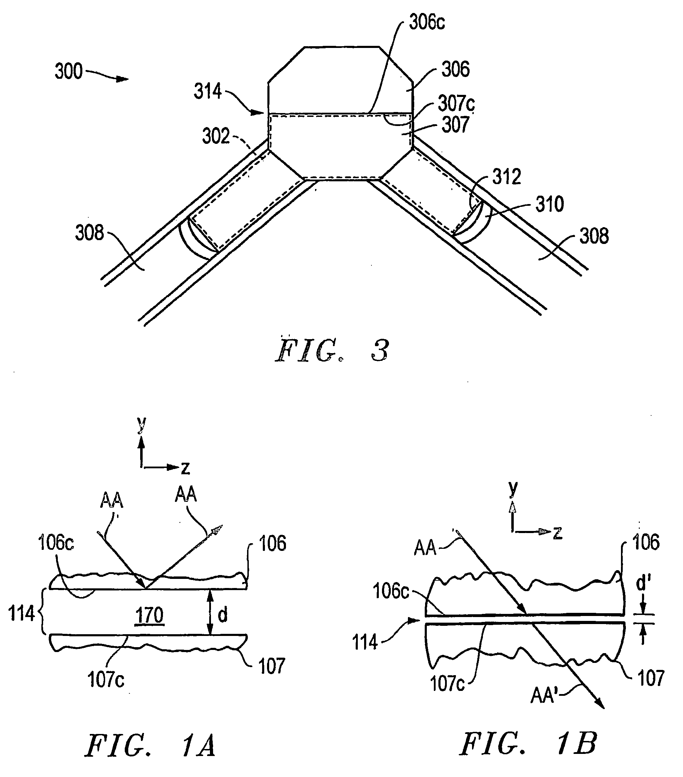

FIGS. 1-7 are provided to illustrate an apparatus and/or method according to the present invention. Various aspects of the invention are embodied in these Figures.

The present invention relates generally to the utilization of radiation pressure inherent or obtainable from a light wave to produce work, for example, mechanical work. The source of this radiation pressure is provided by a light source, or more specifically, propagating electromagnetic waves directed from a light source into or within the apparatus of the invention. The present invention also relates generally to methods and apparatus for communicating or otherwise manipulating such light waves. Operation of a photon engine of the invention entail employment of this aspect of the invention. Generally, the electromagnetic waves are directed into a containment chamber through at least one operable prism that functions in a switching mode. In a preferred embodiment, a primary prism and a secondary prism are used, and are operated together to provide a light switch injection valve, which either reflects light entering the first prism or passes light into the containment chamber.

Operation of the light switch (discussed below in respect to FIGS. 1-7) is based on an optical phenomenon wherein two individual media (*i.e.,* prisms) may be compressed along an interface so that the media combined act as one. First, light is introduced into the primary prism at a predetermined angle. With the light switch in the closed or non-operative mode, the light reflects off a back face or wall of the primary prism. To open the switch and place it in the operative mode, the primary and secondary prisms, *i.e.,* the first and second individual media, are compressed against each other (or more particularly, the secondary prism compresses against or toward the primary prism) through operation of an external driving device. In doing so, the boundary between the two prisms, *i.e.,* the common face, is removed, and the two media function as one. Typically, this boundary may be formed or provided by an air gap or vacuum (in the closed mode) having an index of refraction different from the prism material. Light directed into a first prism, therefore, passes through the boundary with the second prism, through the second prism and enters a containment chamber. It is further advantageous to direct light into the primary prism at a predetermined angle so that the light enters and then propagates within the containment chamber at an angle that is normal to a reflective mirror movably mounted within the chamber.

With light contained in the containment chamber, the light switch is closed. Thus, the light wave or light in the containment chamber maintains columniation and continuously propagates therein. More precisely, the contained light reflects off a first reflective mirror at a normal angle, then against a face of the secondary prism at a nearly 45° angle or other predetermined angle, and then reflects off a second mirror also at a normal angle. These three reflections make up one full cycle which is repeated within a known, predetermined time frame. The time frame also preferably corresponds to 1/2 of the operating frequency of the light switch: between opened and closed modes. During each cycle, the light cycles between the three reflective surfaces at a high rate so that radiation pressure is transmitted to or through the two mirror surfaces thereby converting or translating the energy of the light wave to mechanical work, i.e., movement of the mirror. In preferred embodiments, the mirror is operatively connected to a piston and contained in a cylinder assembly the cylinder preferably does not absorb the light) so as to operate as an engine.

To facilitate description of the invention, a brief explanation of certain concepts is first provided.

The light wave which is the object of the inventive method is an electromagnetic wave. Electromagnetic waves transport linear momentum making it possible to exert a mechanical pressure on a surface by shining a light on it the surface. It should be understood that this pressure is small for individual light photons. But given a sufficient number of photons a significant mechanical pressure may be obtained.

Maxwell (J.C.) showed the resulting momentum p for a parallel beam of light that is totally absorbed is the energy U divided by the speed of light c.

$$p = \frac{U}{c}$$

If the light beam is totally reflected the momentum resulting at a normal incidence to the reflection is twice the total absorbed value.

$$p = \frac{2U}{c}$$

These examples represent the two ends of the spectrum for momentum transfer. At one end is the totally inelastic case of the totally absorbed beam at one end that demonstrates the totally inelastic case where the particles stick together and the most kinetic energy is lost, typically, to another form of energy such as thermal energy or deformation. At the other end of the spectrum, a totally reflected beam demonstrates a completely elastic collision where kinetic energy is conserved.

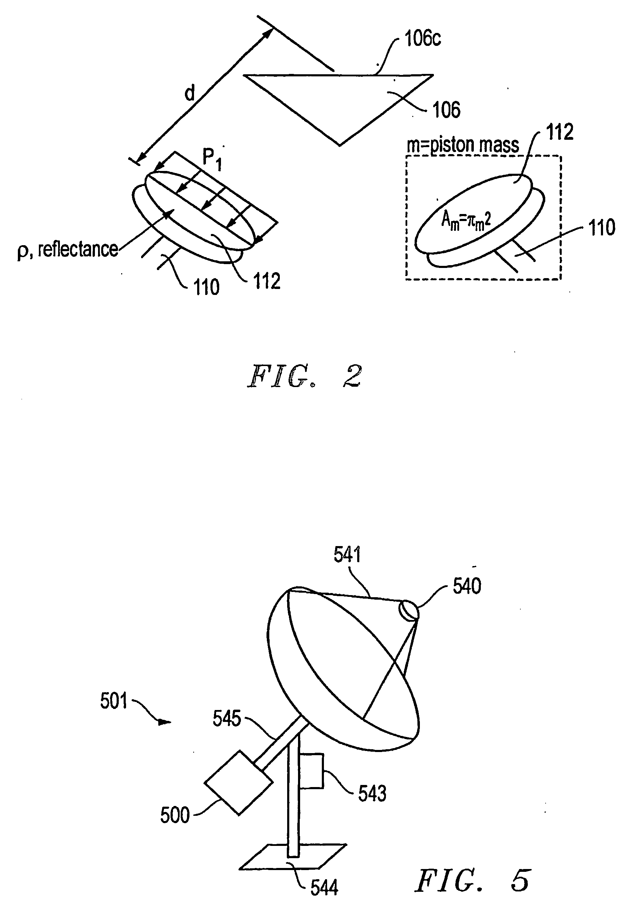

With reference to FIG. 2, the following sections provide calculations on the power produced by an apparatus and method, i.e. an engine, according to the invention. The calculations can be divided into four sections: Force (F); Time (T); Work (W); and Power (P).

The following details the force calculation on a single mirror, with surface area, $A_m$, and an initial radiation pressure entering the containment chamber, $p_1$, until the radiation pressure is effectively zero after z number of bounces.

$$F_{0-z} = p_1 A_m + p_2 A_m + p_3 A_m + \ldots + p_z A_m$$

The relationship between each radiation pressure bounce can be represented as a function of surface reflectance, p.

$$p_2 = \rho\, p_1, \; p_3 = \rho\, p_2, \; p_4 = \rho\, p_3, \; \ldots, \; p_z = \rho\, p_{z-1}$$

Inserting the radiation pressure relationship between bounces off all surfaces results in the following relationship:

$$F_{0-z,total} = p_1 A_m + \varepsilon\, p_1 A_m + \varepsilon^2\, p_1 A_m + \ldots + \varepsilon^z\, p_1 A_m$$

or

$$F_{0-z,total} = \sum_{n=0}^{z} \varepsilon^n\, p_1 A_m$$

For a single mirror every fourth bounce should be added to the force calculation:

$$F_{0-z,\text{single mirror}} = p_1 A_m + \rho^4\, p_1 A_m + \rho^8\, p_1 A_m + \ldots + \rho^{4z/4}\, p_1 A_m$$

or

$$F_{0-z,\text{single mirror}} = \sum_{n=0}^{z/4} \rho^{4n}\, p_1 A_m$$

The time or duration of the force is found by dividing the distance the light travels by the velocity of light.

$$t = \frac{zd}{c}$$

The work of a resultant force on a body equals the change in its kinetic energy. The work calculation for a single piston head is as follows.

$$W = \frac{1}{2} m\left(v_2^{\,2} - v_1^{\,2}\right) \xrightarrow{\;v_1 = 0\;} W = \frac{1}{2} m v_2^{\,2}$$

The relationship between velocity, acceleration and force are as follows.

$$v = at$$

$$F = ma \quad \Rightarrow \quad a = \frac{F}{m}$$

Therefore,

$$v = \frac{F}{m} t$$

To obtain the work on a single mirror the force, time and velocity equation are substituted into the work equation.

$$W_{\text{single mirror}} = \frac{1}{2} \frac{\left(\sum\limits_{n=0}^{z/4} \rho^{4n}\, p_1 A_m\right)^2 \left(\dfrac{zd}{c}\right)^2}{m}$$

For a reflectance that is nearly equal to one the force exerted on the second mirror is approximately equal to the force on the first mirror. Hence, the sum for work in a single containment chamber is as follows.

$$W_{\text{containment chamber}} \approx 2 W_{\text{single mirror}} = \frac{\left(\sum\limits_{n=0}^{z/4} \rho^{4n}\, p_1 A_m\right)^2 \left(\dfrac{zd}{c}\right)^2}{m}$$

Power is the time rate of doing work. If a single chamber operated continuously, the power would have to account for a full operation or cycle of the cylinder that consists of compression and expansion phases where the force is applied during half the compression phase and removed during the expansion phase.

$$P_{\text{containment chamber}} = \frac{1}{4} \frac{W_{\text{containment chamber}}}{t}$$

or

$$P_{\text{containment chamber}} = \frac{\left(\sum_{n=0}^{z/4} \rho^{4n} p_1 A_m\right)^2 \left(\dfrac{zd}{c}\right)}{4m}$$

For a photon engine with 4 containment chambers the power would be as follows.

$$P_{\text{photon engine}} = 4P_{\text{containment chamber}} = \frac{\left(\sum_{n=0}^{z/4} \rho^{4n} p_1 A_m\right)^2 \left(\dfrac{zd}{c}\right)}{m}$$

Now turning to FIGS. 1- 7, these Figures illustrate several embodiments of an apparatus according to the invention. Specifically, each of Figs. 1, 3, 5, and 7 depict an exemplary photon engine according to the invention and various devices for use therewith, also according to the invention. These Figures also depict devices for communicating or otherwise manipulating light waves, according to the invention. One of these inventive devices is a compression boundary light switch. Another of these devices is a primary prism capable of multiplying or splitting a light wave introduced therein (*i.e.,* prior to introduction into the containment chamber) to increase its intensity.

FIG. 1 is a simplified schematic of a system and/or apparatus 100 that manipulates or otherwise communicates light or light waves and/or utilizes radiation pressure to generate mechanical work, each according to the invention. In particular, the apparatus 100 is a photon engine 100 that utilizes radiation provided by a light wave introduced into or manipulated by the apparatus. The inventive photon engine 100 preferably includes a primary prism 106 for receiving the light wave, a secondary prism 107 operatively and collectively associated with the primary prism 106, and a containment chamber 102 (as shown in dash lines in FIG. 1). The primary prism 106 and the secondary prism 108 are situated so as to abut face-to-face (or wall-to-wall) and to form a compression boundary interface 114. As discussed briefly above, the interface 114 may actually include, in one mode, a closeable or compressible air or vacuum gap between the two faces, as further discussed in respect to FIGS. 1a and 1b.

The exemplary photon engine 100 further includes substantially identical pairs of piston housings or cylinders 108, piston assembly 110, and reflective mirrors 112. The containment chamber 102 is defined by the front face of the secondary prism 107, the cylinders 108, and the mirrors 112. The highly reflective mirrors 112 are mounted on a planar surface of the moveable piston 110. The mirrors 112 and piston 112 travel together within the cylinders 108. As will also be described below, the piston assembly 110 may be mechanically connected with a crank shaft assembly and the like.

As is apparent from FIG. 1, movement of the reflective mirrors 112 and piston assembly 110 allows for the volume of the containment chamber 102 to increase or decrease, at least on either side of the secondary prism 107. Preferably, the mirrors 112 will move in unison (as part of a larger piston/crank shaft assembly). Moreover, the compression boundary 114 between the primary prism 106 and secondary prism 107 is controlled by a light switch, also according to the invention. As discussed above, the light switch may be operated by way of a piezoelectric drive mechanism 116 that drives the closing of the air gap (through compression) to allow light to pass into the containment chamber 102. Operation of the drive mechanism 116 determines, therefore, the open and close modes of the light switch 114, in a controlled manner.

The photon engine 100 preferably utilizes quartz material for the primary prism 106 and the secondary prism 107. More specifically, the photon engine 100 provides a compression boundary light switch that operates on two fundamental principals or properties of quartz: the piezoelectric effect and total internal reflection (TIR). The piezoelectric effect occurs when quartz is placed in an electric field. Specifically, quartz expands in the presence of an electric field. The crystalline structure of quartz has three primary axis: X, Y, and Z. By placing an electric field oriented along its X-axis, the quartz will expand or contract based on the direction of the electric field. If the electric field results in a compression along the X-axis, then the quartz will expand along or in the Y-axis. By constraining the quartz along the Y-axis during expansion, stress is generated in the quartz along the Y-axis. This generation of stress and the resulting strain in the Y-axis by an electric field oriented along the X-axis is utilized to compress the two pieces of quartz (*i.e.,* primary prism 106 and secondary prism 107.

FIG. 1a depicts a detailed schematic of the compression boundary interface 114 while in the closed or non-operative mode. In this mode, the back face 106c of the primary prism 106 is spaced from the front face 107c of the secondary prism 107. Given Snell's Law and the incident angle, the index of refraction of both prisms are sufficiently similar (*e.g.,* preferably within bout 5% to about 20% of each other) to facilitate operation of the light switch in the open mode. Also, the index of refraction for both prisms are sufficiently dissimilar from the void (or air space) to facilitate operation of the light switch in the closed mode. As a result, an air gap 170 is provided between the two faces 106c, 107c. In the present description, the compression boundary or interface 114 is used to refer to the air gap 170 and the faces 106c, 107c. FIG. 1A also shows the coordinates or axes X, Y of the quartz or primary prism 106. Typically, the air gap 170 will have a depth of about 2000 nanometers to 50 nanometers, and more preferably, between about 1000 nanometers to 100 nanometers, in the closed or non-operative mode.

FIG. 1b illustrates the compression of the compression boundary 114 upon operation of the piezoelectric drive mechanism 116. The result is that the air gap 170 is compressed to about 100 nanometers to 0 nanometer, upon application or excitation of the electric field. As discussed above, application of the electric field results in contraction along in the X-axis direction, which generates stress in the Y direction (as a result of the quartz material or face 106c being prevented from expanding in the Y direction). Preferably, application of the drive mechanism 116 will be applied to both the primary prism 106 and secondary prism 107, or more specifically, the faces 106c and 107. Preferably, the air gap 170 will be compressed to a depth of about 100 nanometers to about 0 nanometer, and more preferably to a depth of about 50 nanometers to about 0 nanometer.

FIGS. 1a and 1b are also used to indicate the communication of the light wave AA through the primary prism 106 and/or compression boundary 170, according to the invention. In FIG. 1a, the light wave AA impacts the back face 106c at an incident angle of about 45°. Due to the index of refraction provided also by the air gap 170, the light wave AA reflects due to TIR in a direction that is generally 90° to its incident angle. In FIG. 1b, because the air gap 170 is substantially eliminated, and the quartz material of the secondary prism 107 is substantially similar to that of the primary prism 106, the two faces 106c, 107c, function as one single medium. That is, the effect of a different index of refraction (provided by the air gap 170) is eliminated. Accordingly, the light wave AA passes through the face 106c and through the face 107c of the secondary prism 107 without interruption.

Snell's Law describes the effect when radiation, or electric magnetic waves, pass from one media to the other. The resulting angle is a function of the incident angle in the index of refraction for both media. If the result of Snell's Law is an imaginary number, the electromagnetic wave is TIR. The photon engine 100 according to the invention utilizes this phenomenon to contain light waves within the primary prism (as is described in respect to a further embodiment).

By coupling TIR and removal of the TIR boundary through piezoelectric compression, a light switch according to the invention is produced. In the off-mode, with no voltage applied, the light is TIR and remains outside the containment chamber 112. When the voltage is applied, the light switch is said to be in the on-mode and the TIR boundary is removed. This allows the light wave to pass through the compression boundary or interface CC, and into the containment chamber 112. Accordingly, an important step of the inventive method, the light switch is actuated on and than off quickly, so as to capture or contain light.

Preferably, the drive mechanism 116 includes a source of high voltage, low current (near electrostatic) that sends the signal to the piezoelectric quartz or prism 106, 107. Mechanical connections is provided by copper plates, for example, attached to the appropriate faces of the primary and secondary prisms 106, 107. The drive mechanism further includes a field effect transistor for providing switching at a very quick (gigahertz) pulse. Most preferably, the pulse is open for a nanosecond and then off for a millisecond.

FIG. 2 is a schematic of one embodiment of the moveable assembly comprising piston 210 and mirror 212. The assembly is characterized by a mass m (and a particular area) and reflectivity E. In operation, the mirror surface is irradiated by a light flux $p_1$ over a distance d by radiation transmitted through a compression boundary 214 and into secondary prism 207. The radiation pressure p collectively generates a mechanical force that acts on the mirror 212 and piston assembly 210.

Now turning to FIG. 3, there is illustrated an alternative embodiment of a photon engine 300 according to the invention. In the depicted variation, wherein like reference numerals are used to refer to like elements, a primary prism 306 is situated adjacent a secondary prism 307. In particular, a back face 306c of primary prism 306 is spaced from a front face 307c of secondary prism 307, to form a compression boundary interface 314 between the primary prism 306 and the containment chamber 302. The boundary interface 314 provides for an octagonal cross section switch element in this embodiment. In all other aspects of the design and operation, the photon engine 300 is substantially similar to that depicted in FIG. 1. As with the photon engine 100 of FIG. 1, the photon engine 300 includes a pair of cylinders 308, a piston 310 moveably accommodated therein, and a highly reflective mirror 312 mounted on the piston 310.

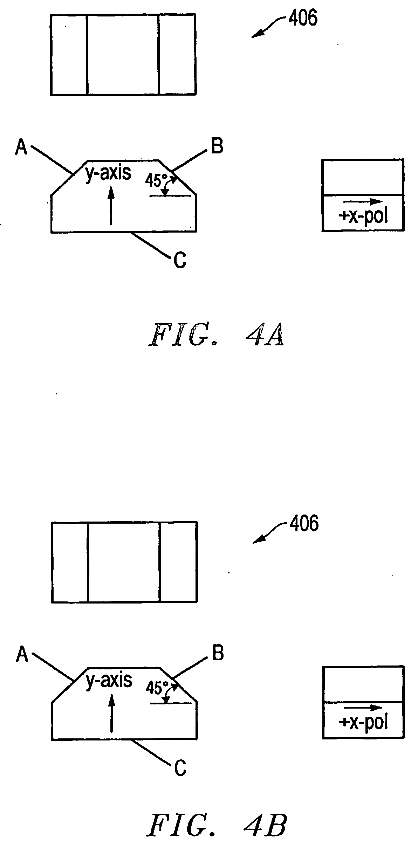

FIGS. 4a and 4b illustrate prisms 406 of various geometric configurations suitable for use as a primary prism in the present invention. The prisms 406 are preferably made of crystalline quartz material with an index of refraction that is greater than 1.45. In practice, it is important to provide for highly polished surfaces through or from which light waves will refract, pass, or reflect. In the prisms 406 of FIG. 4, faces A, B, and C are polished for this purpose.

FIG. 5 depicts a simplified schematic of a system 501 for converting radiant energy into a different form of energy or work, according to the invention. The system 501 utilizes a photon engine 500 as described previously. Furthermore, the system 501 utilizes a primary collective mirror 541 having an inner parabolic surface that may be covered or coated with a 3M™ radiant light film. The system 501 may further include or utilize at least a secondary collector mirror 540 mounted above the primary collector 541 and positioned to reflect light waves reflecting from the inner parabolic surface of the primary collector 541. The secondary collector 540 is characterized by a smaller surface, but may advantageously be covered or coated with 3M™ radiant light film on an outer surface. The system may be further equipped with a light guide 545 for communicating concentrated light from the secondary collector mirror 540 and the primary collector mirror 541 to the photon engine 500. Preferably, the system 501 will include a stand and base assembly 544, and a pointing controller 543 for directing the system 501 towards a radiation source.

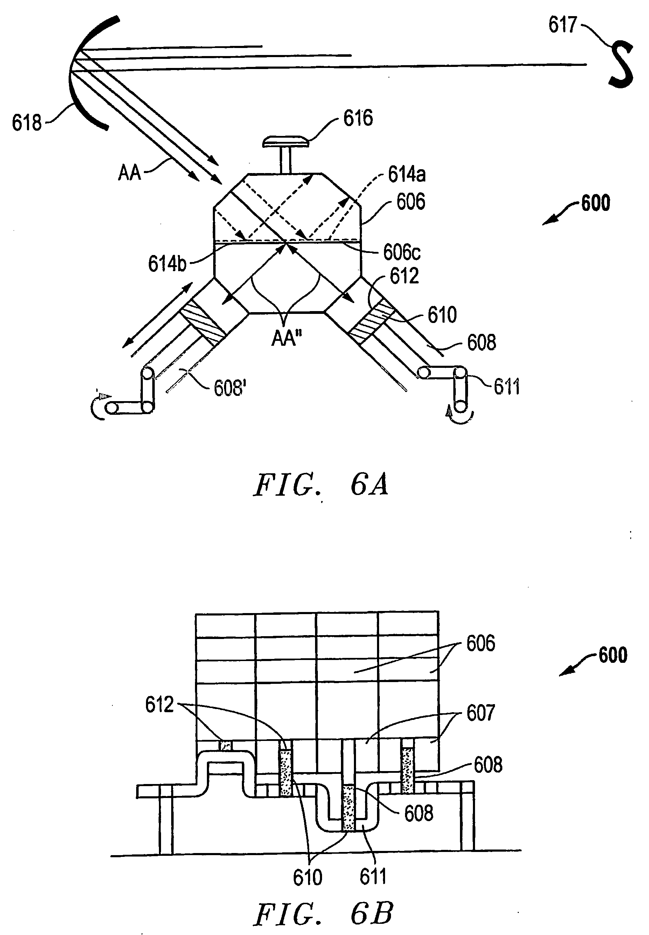

FIGS. 6a and 6b are simplified schematics further illustrating a variation of the inventive photon engine, in particular, a multi-cylinder photon engine 600. These two figures are also illustrative of the operation of the inventive engine 600. FIG. 6a provides a front view of the engine 600, including two cylinders 608, 608' which reciprocate in unison. In the side elevation view of FIG. 6b, the four cylinders 608 on one side of the photon engine 600 are shown. The cylinders 608 accommodate travel of a piston assembly 610 that is operatively connected to crank shaft assembly 611.

Turning to FIG. 6a, the photon engine 600 includes an octagonal shape primary prism 606 positioned adjacent a similarly shaped secondary prism 607, via compression boundary interface 614 formed at least partially by back and front faces 606c, 607c, respectively. The secondary prism 607 communicates with each of cylinders 608, 608' and thus the mirror 612 and piston 610 in each of the cylinders 608, 608'. In the side elevation view of FIG. 6b, four primary prisms 606 and four secondary prisms 607 are shown, each pair being operatively associated with a pair or a bank of cylinders 608 and the piston 610 and crank assemblies 611 situated therein.

Turning to FIG. 6a, the compression boundary interface 614 is operatively driven by a prism piezoelectric drive mechanism 616 to operate the opening or closing of compression boundary light switch (CBLS), as described previously. In FIG. 6a, the interface denoted by 614a is used to show the light switch in the closed position (in dash lines) while reference numeral 614b is used to denote the light switch in the closed position. FIG. 6a further illustrates the source of light waves 617 provided externally of the photon engine 600. The light waves 617 are first captured or concentrated via collector mirror 618 and redirected as instant radiation into the primary prism 606 (see arrows AA). The light waves AA impact the back face 606c at an incident angle of about 45°. If the light switch is in the closed position (denoted by dash line and ref. no. 614a), the light waves AA reflect off the interface 614a (see dash lines) and are redirected through another face of the prism 606 (and exits the primary prism 606).

When the interface 614 is in the open position (denoted by solid line and ref. no. 614b), the light waves AA travels through the interface 614b and enter the containment chamber 602 and impact the back face 606, as shown by arrows AA'. Further, the prisms 606 and 608 are configured such that the light waves AA' enter the containment chamber 608 and are directed straight into the cylinder 608. Thus, the light wave AA' contacts the mirror surface 612 at a preferably generally normal angle and as a result, a relatively high degree of reflectance is achieved. As illustrated, a reflected light wave reflects generally straight back towards the open interface 614b, which is now in a closed position, and impacts the interface at about a 45° angle. Accordingly, the reflected light wave AA' reflects off the closed interface 614b in a direction of the second cylinder 608 of the containment chamber 602. As previously described, the reflected light wave AA' also impacts the second mirror 612 at a generally normal orientation and reflects back at a normal orientation (and at a high degree of reflectance). Accordingly, the light wave AA' reflects along the same path from which it traveled to reach the second mirror 612. In one respect, a predetermined light path is defined by the orientations of the prisms 606, 607, the cylinder 608, 608', among other components. Such a predetermined light path is represented by the bi-directional arrows AA' in FIG. 6.

As also described previously, contact of the light wave AA' on the surface of the mirror 612 generates radiation pressure thereon. This radiation pressure acts to displace the mirror 612 and piston 610 assembly a distance which is denoted by "X" in FIG. 6 (thereby generating work). Moreover, this displacement causes crank shaft assembly 611 to turn thereby generating mechanical energy. In another mode, the drive mechanism 614 may be operated in a frequency modulated mode so that the opening and closing of the light switch allows light to enter the secondary prism 607 on a time scale that is related to the frequency of the radiation inside the secondary prism 607. In this way, the radiation pressure on piston 612 assemblies is reinforced.

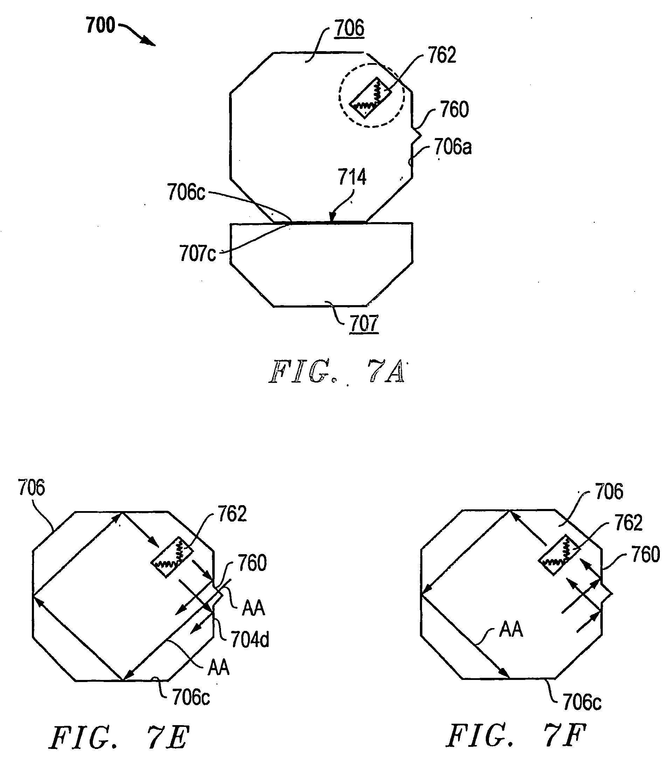

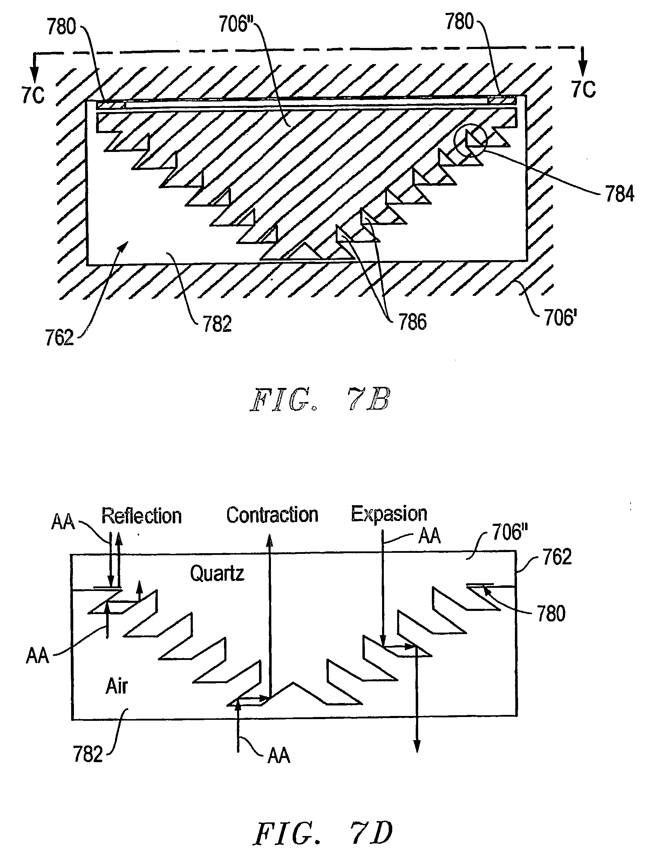

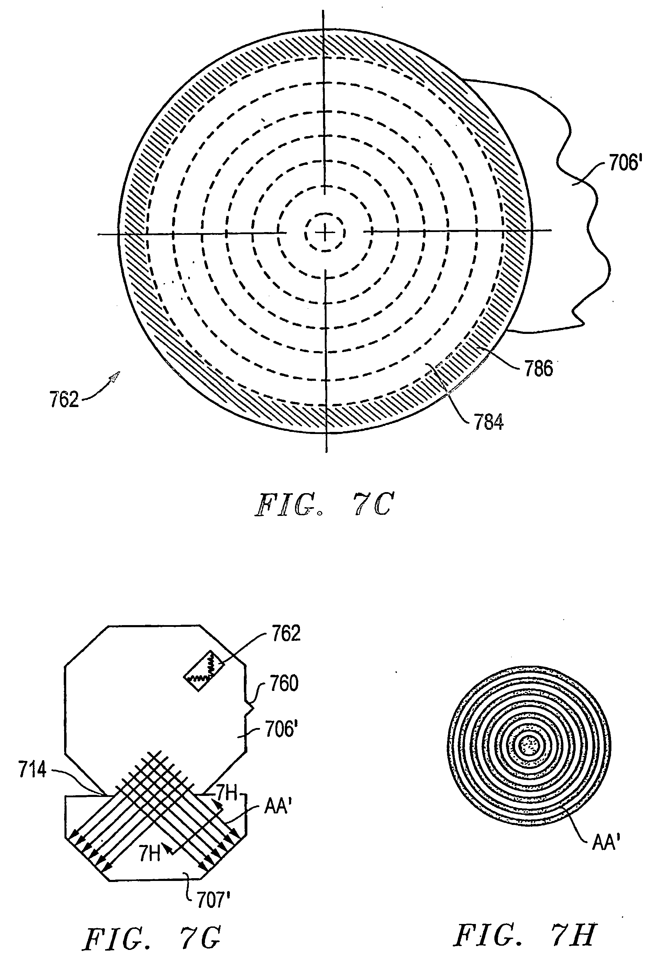

The simplified schematics of FIG. 7 illustrates yet another alternative embodiment of the photon engine according to the invention, wherein like reference numerals are used to indicate like elements. In particular, FIG. 7a depicts an arrangement of a primary prism 706 and a secondary prism 707 that utilizes a light beam expander/contractor 762 embedded in the primary prism 706. Specifically, the light beam expander/contractor 770 functions to split the light beam multiple times and redirect it upon itself, thereby increasing the intensity of the light wave ultimately introduced into the containment chamber 702a.

In the embodiment of FIG. 7, the primary prism 706 has an octagonal shape, and thus, has eight faces or walls 706a-706h (only some of which are shown). As in previous embodiments, the primary prism 706 is preferably made of a quartz material. The primary prism 706 includes a protrusion 760 extending from the first face 706a, that serves as a beam inlet 760. The beam inlet 760 preferably has a concentrated, circular shape. Further, another face 706c of the primary prism 706 is positioned adjacent to and spaced apart from a front face 707c of the secondary prism 707 to form a compression boundary interface 714. As discussed above, the interface 714 provides for a compression boundary light switch upon operation by the proper drive mechanism, in accordance with the present invention.

Referring to the detailed view of FIG. 7b, in yet another aspect of the invention, the primary prism 706 is equipped with a light beam expander/ contractor 762 positioned internally of the primary prism 706 and embedded in the quartz material 706'. FIGS. 7c and 7d provide further detail illustrations of the expander/contractor 762.

Returning to FIG. 7d, the light expander/contractor 762 is a faceted quartz block embedded in the quartz material 706'. Physically, the light expander/contractor 762 is a carved, circular section of quartz material 706' having concentric air interfaces 786 cut therein. The faceted quartz block 762 is centered on an incoming light beam AA having a given diameter. As shown in FIG. 7b, the quartz block 762 (*i.e.,* the light expander/contractor 762) provides a set of concentric 45° facets of quartz-air interfaces. The cross hatch section illustrates the quartz material 706' of the primary prism 706 as well as the quartz material 706" of the quartz block 762. The remaining non-cross hatch areas are air or vacuum interfaces 782, which are void of the quartz material. More importantly, these air interfaces 782 have optic properties (i.e., index of refraction) different from that of the quartz material. FIG. 7b and the plan view of FIG. 7c, also depict a concentric mirror 780 providing the outer cylinder of the concentric interfaces. As will be explained below, the mirror 780 functions to reflect the outer most diameter concentric cylinder of light during operation, thereby reversing the light path and beginning the process of light contraction.

The schematic of FIG. 7d is provided an illustration of how the inventive light expander/contractor 762 communicates or otherwise manipulates a light beam AA traveling through the primary prism 706. In a first mode of communication, the light beam $AA_E$ reflects upon the 45° quartz-air interface 784. Each incident beam experiences two 90° reflections in the outward direction, thereby converting the diameter of the beam to a larger (expansion) diameter. In the reverse mode, the light beam $AA_C$ again hits the quartz-air interface 784 and experiences again two 90° reflections that converts the diameter to a smaller (contraction) diameter.

The light expander/contractor 762 provides, therefore, three operations: light expansion, light reflection, and light contraction. Light reflection ($AA_L$) occurs once the light beam AA has been expanded to the largest concentric cylinder. This is prompted by reflection off of mirror 780, which reverses the direction of the light $AA_L$. Once the light beam has been completely expanded and contracted, the light switch (compression boundary interface 714) is activated, thereby allowing the containment chamber 702 to be filled in two directions, as shown in FIG. 7g. FIG. 7h illustrates the resulting beam pattern acting on a mirror 710 and piston assembly (not shown), after the beam flux has been multiplied in the primary prism 706. Once all of the light is injected into the containment chamber 702, the light switch is returned to the closed position so that the resulting beam is contained in the containment chamber 702. The multiplication of the light beam flux from the primary prism 706 results, therefore, in a higher power output.

FIGS. 7e and 7f illustrate general operation of the primary prism 706, while the compression boundary light switch is in the closed or off mode. Collected light beam AA is introduced into the primary prism 706 at a generally normal angle through beam inlet 760. Preferably, the beam inlet 760 is located such that the light beam AA introduced into the primary prism 706 is directed towards the back face 706c and compression boundary interface 714. Initially, the light switch is in the closed or reflective stage. Thus, the light beam AA reflects at a generally normal angle and toward another face 706e of the primary prism 706. The incident angle of this reflected light beam AA is such that the light beam AA will also reflect off the prism face 706e (and subsequent face 706g) at a generally normal angle. Accordingly, as illustrated in FIG. 7e, the light beam AA initially rotates around the primary prism 706 due to total internal reflection.

Preferably, the collected beam AA enters the primary prism 706 and experiences three light reflections before entering the beam expander/contractor 762. The direction at which the light beam AA enters the expander/contractor 762 determines whether the beam AA is expanded or contracted. In FIG. 7e, the light beam AA is shown rotating within the primary prism 706 in the clockwise direction. In this direction, the light beam entrance into the beam expander/contractor 762 results in the light beam AA being expanded. Conversely, the light beam AA may be directed within the primary prism in a counter clockwise direction. As illustrated in FIG. 7f, the light beam AA enters the expander/contractor 762 such that the resulting light beam will be contracted. With each rotation and introduction into the beam expander/contractor, the resulting light beam AA expands or contracts to the next level of concentric cylinders. Expansion is, however, limited by the reflected mirror 780 at the largest level of concentric cylinders. At this point, the direction of the light beam AA is reversed thereby reinitiating the process of contraction.

It should be understood, however, that various arrangements and deployments of the components of inventive apparatus in accordance with the invention may be made and will vary according to the particular environment and applications. However, in any such applications, various aspects of the inventions will be applicable, as described above. For example, various aspects of the photon engine, such as the containment chamber design, the optical switching devices, and the light multiplier or light wave intensifier may be incorporated with other engine or mechanical work devices. As a further example, the piston and cylinder assembly may be replaced by another energy system such a energy storage device (e.g., a spring device).

The foregoing description of the present invention has been presented for purposes of illustration and description. It is to be noted that the description is not intended to limit invention to the apparatus, and method disclosed herein. Various aspects of the invention as described above may be applicable to other types of engines and mechanical work devices and methods for harnessing radiation pressure to generate mechanical work. It is to be noted also that the invention is embodied in the method described, the apparatus utilized in the methods, and in the related components and subsystems. These variations of the invention will become apparent to one skilled in the optics, engine art, or other relevant art, provided with the present disclosure. Consequently, variations and modifications commensurate with the above teachings and the skill and knowledge of the relevant art are within the scope of the present invention. The embodiments described and illustrated herein are further intended to explain the best modes for practicing the invention, and to enable others skilled in the art to utilize the invention and other embodiments and with various modifications required by the particular applications or uses of the present invention.

**Claims**

1. An apparatus (100) for utilizing radiation pressure provided by a light wave to generate mechanical work, said apparatus (100) comprising:

   a collector (541) configured to collect light waves from an external source;
   a containment chamber (102) constructed to receive collected light waves and contain the propagation of light waves therein along a predetermined reflected light wave path;
   a receiving prism (106) positioned adjacent said containment chamber (102) and positioned to receive a light wave from the collector (541) prior to introduction of the light wave into said containment chamber (102);
   a first reflective mirror (112) positioned at one end of said containment chamber (102), said first reflective mirror (112) having a first reflective surface and being moveable along a predetermined mirror path; and
   a second reflective mirror (112) having a second reflective surface positioned at a second end of said containment chamber (102), wherein
   the predetermined light wave path extends between said first and second reflective surfaces and wherein repeated contact of the light wave against the first reflective surface allows radiation pressure repeatedly acting upon the first reflective surface to cause the first reflective mirror (112) to travel along the predetermined mirror path, thereby generating mechanical work.

2. The apparatus (100) of claim 1, further comprising an optic switch selectively operable in an open mode and a closed mode, wherein said open mode allows a light wave to enter said containment chamber (102) and said closed mode prevents escape of the light wave from said containment chamber (102).

3. The apparatus (100) of claim 2, further comprising:

   a first prism (107) positioned in said containment chamber (102) such that the volume of said first prism (107) provides a portion of the containment chamber and such that one face (107c) of said first prism (107) provides a gate for said optic switch; and
   wherein the receiving prism (106) is a second prism (106) positioned adjacent said containment chamber (102) such that one face (106c) of said second prism (106) is positioned adjacent said one face (106c) of said first prism (107), and such that compression between said first and second prisms (107, 106) operates said optic switch between said open and closed modes, wherein a light wave received in said second prism (106) is passable through said one faces of said first and second prisms (107, 106) into said containment chamber (102) in said open mode.

4. The apparatus (100) of claim 1, 2, or 3, further comprising:

   a first piston (110) and a second piston (110), each said piston (110) being operatively associated with a corresponding first or second movable reflective mirror (112) such that movement of said movable reflective mirror (112) effects travel of said piston (110).

5. The apparatus (100) of claim 1 or 2, wherein said collector (541) includes means for concentrating the collected light waves.

6. The apparatus (100) of claim 2, wherein the receiving prism (106) is positioned to receive a concentrated light wave from said collector (541), said receiving prism (106) being in operative association with said optic switch such that a light wave received in said receiving prism (106) is selectively introduced into said containment chamber (102) by switching said optic switch to said open mode.

7. The apparatus (100) of claim 6, wherein said receiving prism (106) includes a means for intensifying the light wave (762) received in said receiving prism (106) prior to introduction of an intensified light wave into said containment chamber (102).

8. The apparatus (100) of claim 7, wherein said light wave intensifying means (762) includes a light multiplier (762) adapted to multiply a light wave propagating in said receiving prism (106).

9. The apparatus (100) of claim 8, wherein said receiving prism (106) is formed of a quartz material and includes quartz-void interfaces (782) that provide said light multiplier (762).

10. The apparatus (100) of claim 9, wherein said quartz-void interfaces are positioned to split light waves reflecting within said receiving prism (106) when said switch is in said close mode, said interfaces (782) having angularly positioned faces from which directed light waves can reflect.

11. The apparatus (100) of claim 9, wherein said light multiplier (762) is a faceted quartz block embedded within said quartz material of said receiving prism (106), said quartz block including concentric quartz-void interfaces (782) cut therein and an outer concentric mirror (780), wherein said quartz block is positioned relative to a predetermined light wave path of a light wave directed into said receiving prisms (106) such that the light wave is caused with repeated contact with said light multiplier (762) to expand, reflect, and contract.

12. The apparatus (100) of claim 3, wherein said one face (107c) of said first prism (107) and a second one face (106c) of said second prism (106) are spaced apart to provide an interface medium (114) therebetween, said optic switch being operable to drive compression between said one faces such that said interface medium (114) is substantially eliminated to form a transparent interface between said first and second prisms.

13. The apparatus (100) of claim 12, further comprising a piezoelectric actuator (116) operably associated with, at least, one of said first and second prisms (107, 106) and operable to drive compression between said one faces (107c, 106c) such that said interface medium (116) is substantially eliminated to form a transparent interface between said first and second prisms (107, 106).

14. The apparatus (100) of claim 12 or 13, wherein said second prism (106) is a receiving prism (106) configured to receive a concentrated light wave from said collector (541), said receiving prism (106) being in operative association with said optic switch such that said optic switch is selectively operable to pass a light wave received in said receiving prism (106) trough said one faces (107c, 106c) and into said containment chamber (102).

15. The apparatus (100) of claim 12, 13 or 14, wherein said one faces (107c, 106c) are spaced apart more than about 1000 nanometers in said closed mode and between about 0 to about 50 nanometers in said open mode.

16. The apparatus (100) of any one of claims 12 to 15, wherein said interface medium (114) has an interface index of refraction, and wherein said first prism (107) is an optical medium having a first index of refraction and said second prism (106) is an optical medium having a second index of refraction that is substantially similar to the first index of refraction and substantially dissimilar to the index of refraction of the interface medium (114).

17. The apparatus (100) of claim 16, wherein said interface medium (114) is an air gap and said first and second index of refractions are within less than 20% of one another.

18. The apparatus (100) of claim 17, wherein said first and second prisms (107, 106) are both formed from a quartz material.

19. The apparatus (100) of claim 12, wherein said first and second reflective surfaces and said one face (107c) of said first prism (107) are located and oriented to define, at least partially, said predetermined reflective light wave path in said containment chamber (102).

20. The apparatus (100) of claim 19, wherein said first and second reflective surfaces are positioned such that a light wave introduced into said containment chamber (102) by operation of said optic switch travels along said predetermined light wave path, said light wave path being directed generally normal to each of said first and second reflective surfaces.

21. The apparatus (100) of claim 20, wherein, in said open mode, said one face (107c) of said first prism (107) is positioned to pass a light wave into said containment chamber (102) from said second prism (106) and, in said closed mode, to reflect a light wave returning from said first reflective surface in the direction of said second reflective surface along said predetermined light wave path.

22. The apparatus (100) of any one of claims 1 to 6 or 19 to 21, further comprising a second movable reflective mirror (112) positioned at said second end of said containment chamber (102), said second reflective mirror (112) having said second reflective surface.

23. The apparatus (100) of any one of claims 1 to 6 or 19, wherein said collector (541) includes a primary collector mirror (540) having a parabolic surface configured to reflect and concentrate the collected light waves, a secondary collector mirror (541) positioned above said primary collector mirror (541) to reflect concentrated light waves reflected from said parabolic surface of said primary collector mirror (541) and redirect the concentrated light waves.

24. The apparatus (100) of claim 23, further comprising a light guide (545) positioned to receive the concentrated light wave from the primary collector mirror (541) and transmit the concentrated light wave toward said containment chamber (102).

**Patentansprüche**

1. Vorrichtung (100) zum Ausnutzen eines Strahlungsdrucks, welcher durch eine Lichtwelle bereitgestellt wird, um eine mechanische Arbeit zu erzeugen, wobei die Vorrichtung (100) umfasst:

    einen Kollektor (541), welcher ausgestaltet ist, um Lichtwellen von einer externen Quelle zu sammeln;
eine Einschlusskammer (102), welche konstruiert ist, um aufgesammelte Lichtwellen aufzunehmen und um die Ausbreitung von Lichtwellen darin entlang einem vorbestimmten Pfad einer reflektierten Lichtwelle zu halten;
ein Aufnahmeprisma (106), welches neben der Einschlusskammer (102) angeordnet ist und angeordnet ist, um eine Lichtwelle von dem Kollektor (541) vor einer Einführung der Lichtwelle in die Einschlusskammer (102) aufzunehmen;
ein erster reflektierender Spiegel (112), welcher an einem Ende der Einschlusskammer (102) angeordnet ist, wobei der erste reflektierende Spiegel (112) eine erste reflektierende Oberfläche aufweist und bewegbar entlang einem vorbestimmten Spiegelpfad ist; und
einen zweiten reflektierenden Spiegel (112), welcher eine zweite reflektierende Oberfläche aufweist und an einem zweiten Ende der Einschlusskammer (102) angeordnet ist,
wobei sich der vorbestimmte Lichtwellenpfad zwischen der ersten und der zweiten reflektierenden Oberfläche erstreckt und wobei ein wiederholter Kontakt der Lichtwelle gegenüber der ersten reflektierenden Oberfläche ermöglicht, dass ein Strahlungsdruck wiederholt gegenüber der ersten reflektierenden Oberfläche wirkt, um zu bewirken, dass sich der erste reflektierende Spiegel (112) entlang dem vorbestimmten Spiegelpfad bewegt, wodurch die mechanische Arbeit erzeugt wird.

2. Vorrichtung (100) nach Anspruch 1, darüber hinaus einen optischen Schalter umfassend, welcher selektiv in einer offenen Betriebsart und einer geschlossenen Betriebsart betreibbar ist, wobei es die offene Betriebsart ermöglicht, dass eine Lichtwelle in die Einschlusskammer (102) eindringt, und wobei die geschlossene Betriebsart verhindert, dass eine Lichtwelle von der Einschlusskammer (102 entkommt.

3. Vorrichtung (100) nach Anspruch 2, darüber hinaus umfassend:

    ein erstes Prisma (107), welches in der Einschlusskammer (102) angeordnet ist, so dass das Volumen des ersten Prismas (107) einen Teil der Einschlusskammer bereitstellt und so dass eine Seite (107c) des ersten Prismas (107) ein Tor für den optischen Schalter bereitstellt; und
wobei das Aufnahmeprisma (106) ein zweites Prisma (106) ist, welches neben der Einschlusskammer (102) angeordnet ist, so dass eine Seite (106c) des zweiten Prismas (106) neben der einen Seite (106c) des ersten Prismas (107) angeordnet ist und so dass eine Kompression zwischen dem ersten und dem zweiten Prisma (107, 106) den optischen Schalter zwischen der offenen und der geschlossenen Betriebsart betätigt,
wobei eine Lichtwelle, welche in dem zweiten Prisma (106) aufgenommen wird, in der offenen Betriebsart durch die eine Seite des ersten und des zweiten Prismas (107, 106) in die Einschlusskammer (102) passieren kann.

**4.** Vorrichtung (100) nach Anspruch 1, 2 oder 3, darüber hinaus umfassend:

einen ersten Kolben (110) und einen zweiten Kolben (110), wobei jeder Kolben (110) betriebsfähig einem entsprechenden ersten oder zweiten bewegbaren reflektierenden Spiegel (112) zugeordnet ist, so dass eine Bewegung des bewegbaren reflektierenden Spiegels (112) eine Bewegung des Kolbens (110) bewirkt.

**5.** Vorrichtung (100) nach Anspruch 1 oder 2, wobei der Kollektor (541) Mittel aufweist, um die gesammelten Lichtwellen zu konzentrieren.

**6.** Vorrichtung (100) nach Anspruch 2, wobei das Aufnahmeprisma (106) angeordnet ist, um eine konzentrierte Lichtwelle von dem Kollektor (541) aufzunehmen, wobei sich das Aufnahmeprisma (106) in einer betrieblichen Verbindung mit dem optischen Schalter befindet, so dass eine Lichtwelle, welche in dem Aufnahmeprisma (106) aufgenommen wird, selektiv in die Einschlusskammer (102) eingeführt wird, indem der optische Schalter in die offene Betriebsart geschaltet wird.

**7.** Vorrichtung (100) nach Anspruch 6, wobei das Aufnahmeprisma (106) Mittel aufweist, um die Lichtwelle (762), welche in dem Aufnahmeprisma (106) empfangen wird, vor einer Einführung einer verstärkten Lichtwelle in die Einschlusskammer (102) zu verstärken.

**8.** Vorrichtung (100) nach Anspruch 7, wobei die Lichtwellen-Verstärkungsmittel (762) einen Lichtvervielfacher (762) aufweisen, welcher ausgestaltet ist, um Lichtwellen, welche sich in dem Aufnahmeprisma (106) ausbreiten, zu vervielfachen.

**9.** Vorrichtung (100) nach Anspruch 8, wobei das Aufnahmeprisma (106) aus einem Quarzmaterial ausgebildet ist und Quarzfehlstellen-Schnittstellen (782) aufweist, was den Lichtvervielfacher (762) bereitstellt.

**10.** Vorrichtung (100) nach Anspruch 9, wobei die Quarzfehlstellen-Schnittstellen angeordnet sind, um Lichtwellen, welche in dem Aufnahmeprisma (106) reflektiert werden, aufzuteilen, wenn sich der Schalter in der geschlossenen Betriebsart befindet, wobei die Schnittstellen (782) winklig angeordnete Flächen aufweisen, von welchen gerichtete Lichtwellen reflektiert werden können.

**11.** Vorrichtung (100) nach Anspruch 9, wobei der Lichtvervielfacher (762) ein facettierter Quarzblock ist, welcher in dem Quarzmaterial des Aufnahmeprismas (106) eingebettet ist, wobei der Quarzblock konzentrische Quarzfehlstellen-Schnittstellen (782), welche dort hinein geschnitten sind, und einen äußeren konzentrischen Spiegel (780) aufweist, wobei der Quarzblock relativ zu einem vorbestimmten Lichtwellenpfad einer Lichtwelle, welche in das Aufnahmeprisma (106) gerichtet ist, angeordnet ist, so dass bewirkt wird, dass sich die Lichtwelle mit einem wiederholten Kontakt mit dem Lichtvervielfacher (762) ausweitet, reflektiert und zusammenzieht.

**12.** Vorrichtung (100) nach Anspruch 3, wobei die eine Seite (107c) des ersten Prismas (107) und eine Seite (106c) des zweiten Prismas (106) beabstandet sind, um ein Schnittstellenmedium (114) dort dazwischen bereitzustellen, wobei der optische Schalter betriebsbereit ist, um eine Kompression zwischen den Seiten zu steuern, so dass das Schnittstellenmedium (114) im Wesentlichen eliminiert wird, um eine transparente Schnittstelle zwischen dem ersten und dem zweiten Prisma auszubilden.

**13.** Vorrichtung (100) nach Anspruch 12, darüber hinaus ein piezoelektrisches Betätigungselement (116) umfassend, welches betriebsbereit zumindest dem ersten oder zweiten Prisma (107, 106) zugeordnet ist und betriebsbereit ist, um eine Kompression zwischen den Seiten (107c, 106c) zu steuern, so dass das Schnittstellenmedium (116) im Wesentlichen eliminiert wird, um eine transparente Schnittstelle zwischen dem ersten und dem zweiten Prisma (107, 106) auszubilden.

**14.** Vorrichtung (100) nach Anspruch 12 oder 13, wobei das zweite Prisma (106) ein Aufnahmeprisma (106) ist, welches ausgestaltet ist, um eine konzentrierte Lichtwelle von dem Kollektor (541) aufzunehmen, wobei sich das Aufnahmeprisma (106) in einer betriebsbereiten Verbindung mit dem optischen Schalter befindet, so dass der optische Schalter selektiv betrieben werden kann, um eine Lichtwelle, welche in dem Aufnahmeprisma (106) aufgenommen wird, durch die Seiten (107c, 106c) und in die Einschlusskammer (102) passieren zu lassen.

**15.** Vorrichtung (100) nach Anspruch 12, 13 oder 14, wobei die Seiten (107c, 106c) um mehr als ungefähr 1000 Nanometer in der geschlossenen Betriebsart und zwischen ungefähr 0 bis ungefähr 50 Nanometer in der offenen Betriebsart beabstandet sind.

**16.** Vorrichtung (100) nach einem der Ansprüche 12 bis 15, wobei das Schnittstellenmedium (114) einen Schnittstellen-Brechungsindex aufweist, und wobei das erste Prisma (107) ein optisches Medium mit einem ersten Brechungsindex und das zweite Prisma (106) ein optisches Medium mit einem zweiten Brechungsindex ist, welcher im Wesentlichen ähnlich dem ersten Brechungsindex und im Wesentlichen dem Brechungsindex des Schnittstellenmediums (114) unähnlich ist.

**17.** Vorrichtung (100) nach Anspruch 16, wobei das Schnittstellenmedium (114) ein Luftspalt ist und wobei sich der erste und der zweite Brechungsindex um weniger als 20 % voneinander unterscheiden.

**18.** Vorrichtung (100) nach Anspruch 17, wobei sowohl das erste als auch das zweite Prisma (107, 106) beide aus einem Quarzmaterial ausgebildet sind.

**19.** Vorrichtung (100) nach Anspruch 12, wobei die erste und die zweite reflektierende Oberfläche und die Seite (107c) des ersten Prismas (107) angeordnet und ausgerichtet sind, um zumindest teilweise den vorbestimmten Pfad der reflektierten Lichtwelle in dem Einschlusskammer (102) zu definieren.

**20.** Vorrichtung (100) nach Anspruch 19, wobei die erste und die zweite reflektierende Oberfläche angeordnet sind, so dass eine Lichtwelle, welche in die Einschlusskammer (102) eingeführt wird, sich durch eine Betätigung des optischen Schalters entlang dem vorbestimmten Lichtwellenpfad bewegt, wobei der Lichtwellenpfad im Allgemeinen jeweils senkrecht zu der ersten und der zweiten reflektierenden Oberfläche ausgerichtet ist.

**21.** Vorrichtung (100) nach Anspruch 20, wobei die eine Seite (107c) des ersten Prismas (107) in der offenen Betriebsart angeordnet ist, um eine Lichtwelle von dem zweiten Prisma (106) in die Einschlusskammer (102) passieren zu lassen und um in der geschlossenen Betriebsart eine Lichtwelle, welche von der ersten reflektierenden Oberfläche zurückkehrt, in die Richtung der zweiten reflektierenden Oberfläche entlang des vorbestimmten Lichtwellenpfads zu reflektieren.

**22.** Vorrichtung (100) nach einem der Ansprüche 1 bis 6 oder 19 bis 21, darüber hinaus einen zweiten bewegbaren reflektierenden Spiegel (112) umfassend, welcher an dem zweiten Ende der Einschlusskammer (102) angeordnet ist, wobei der zweite reflektierende Spiegel (112) die zweite reflektierende Oberfläche aufweist.

**23.** Vorrichtung (100) nach einem der Ansprüche 1 bis 6 oder 19, wobei der Kollektor (541) aufweist einen primären Kollektorspiegel (540), welcher eine parabolische Oberfläche aufweist, welche ausgestaltet ist, um die gesammelten Lichtwellen zu reflektieren und zu konzentrieren, und einen zweiten Kollektorspiegel (541), welcher über dem primären Kollektorspiegel (541) angeordnet ist, um konzentrierte Lichtwellen, welche von der parabolischen Oberfläche des primären Kollektorspiegels (541) reflektiert werden, zu reflektieren und die konzentrierten Lichtwellen zurückzulenken.

**24.** Vorrichtung (100) nach Anspruch 23, darüber hinaus einen Lichtleiter (545) umfassend, welcher angeordnet ist, um die konzentrierte Lichtwelle von dem primären Kollektorspiegel (541) zu empfangen und die konzentrierte Lichtwelle zu der Einschlusskammer (102) zu übertragen

**Revendications**

**1.** Dispositif (100) pour utiliser la pression de radiation créée par une onde lumineuse afin de produire un travail mécanique, ledit dispositif (100) comportant :

un collecteur (541) conçu pour collecter des ondes lumineuses issues d'une source extérieure ;
une chambre de confinement (102) construite pour recevoir des ondes lumineuses collectées et y confiner la propagation d'ondes lumineuses sur un trajet prédéterminé d'ondes lumineuses réfléchies ;
un prisme de réception (106) placé au voisinage immédiat de ladite chambre de confinement (102) et placé de façon à recevoir une onde lumineuse du collecteur (541) avant l'introduction de l'onde lumineuse dans ladite chambre de confinement (102) ;
un premier miroir réfléchissant (112) disposé à une première extrémité de ladite chambre de confinement (102), ledit premier miroir réfléchissant (112) ayant une première surface réfléchissante et étant mobile sur un parcours de miroir prédéterminé ; et

un second miroir réfléchissant (112) ayant une seconde surface réfléchissante, disposé à une seconde extrémité de ladite chambre de confinement (102),

le trajet prédéterminé d'ondes lumineuses s'étendant entre lesdites première et seconde surfaces réfléchissantes, et le contact répété de l'onde lumineuse contre la première surface réfléchissante permettant à une pression de radiation agissant de manière répétée sur la première surface réfléchissante de provoquer un déplacement du premier miroir réfléchissant (112) sur le parcours de miroir prédéterminé, en produisant de la sorte un travail mécanique.

2. Dispositif (100) selon la revendication 1, comportant en outre un commutateur optique pouvant fonctionner au choix en mode ouvert et en mode fermé, ledit mode ouvert permettant à une onde lumineuse d'entrer dans ladite chambre de confinement (102) et ledit mode fermé empêchant que l'onde lumineuse ne s'échappe de ladite chambre de confinement (102).

3. Dispositif (100) selon la revendication 2, comportant en outre :

un premier prisme (107) disposé dans ladite chambre de confinement (102) de telle façon que le volume dudit premier prisme (107) constitue une partie de la chambre de confinement et de telle façon qu'une face (107c) dudit premier prisme (107) constitue une porte pour ledit commutateur optique ; et

dans lequel le prisme de réception (106) est un second prisme (106) disposé au voisinage immédiat de ladite chambre de confinement (102) de façon qu'une face (106c) dudit second prisme (106) soit disposée au voisinage immédiat de ladite face (106c) dudit premier prisme (107), et de façon qu'une compression entre lesdits premier et second prismes (107, 106) manoeuvre ledit commutateur optique entre lesdits modes ouvert et fermé, une onde lumineuse reçue dans ledit seconde prisme (106) pouvant, dans ledit mode ouvert, passer à travers lesdites faces desdits premier et second prismes (107, 106) pour entrer dans ladite chambre de confinement (102).

4. Dispositif (100) selon la revendication 1, 2 ou 3, comportant en outre :

un premier piston (110) et un second piston (110), chaque dit piston (110) coopérant avec un premier ou un second miroir réfléchissant mobile correspondant (112) de façon qu'un mouvement dudit miroir réfléchissant mobile (112) provoque une course dudit piston (110).

5. Dispositif (100) selon la revendication 1 ou 2, dans lequel ledit collecteur (541) comprend un moyen pour concentrer les ondes lumineuses collectées.

6. Dispositif (100) selon la revendication 2, dans lequel le prisme de réception (106) est disposé de manière à recevoir dudit collecteur (541) une onde lumineuse concentrée, ledit prisme de réception (106) coopérant avec ledit commutateur optique de façon qu'une onde lumineuse reçue dans ledit prisme de réception (106) soit introduite sélectivement dans ladite chambre de confinement (102) en basculant ledit commutateur optique dans ledit mode ouvert.

7. Dispositif (100) selon la revendication 6, dans lequel ledit prisme de réception (106) comprend un moyen (762) pour intensifier l'onde lumineuse reçue dans ledit prisme de réception (106) avant l'introduction d'une onde lumineuse intensifiée dans ladite chambre de confinement (102).

8. Dispositif (100) selon la revendication 7, dans lequel ledit moyen d'intensification (762) d'onde lumineuse comprend un photomultiplicateur (762) conçu pour multiplier une onde lumineuse se propageant dans ledit prisme de réception (106).

9. Dispositif (100) selon la revendication 8, dans lequel ledit prisme de réception (106) est en matière sous forme de quartz et comprend des interfaces (782) dépourvues de quartz qui créent ledit photomultiplicateur (762).

10. Dispositif (100) selon la revendication 9, dans lequel lesdites interfaces dépourvues de quartz sont disposées de façon à diviser des ondes lumineuses réfléchies dans ledit prisme de réception (106) lorsque ledit commutateur optique est dans ledit mode fermé, lesdites interfaces (782) ayant des faces à disposition angulaire qui peuvent réfléchir des ondes lumineuses orientées.

11. Dispositif (100) selon la revendication 9, dans lequel ledit photomultiplicateur (762) est un bloc de quartz à facettes enchâssé dans ladite matière sous forme de quartz dudit prisme de réception (106), ledit bloc de quartz comprenant des interfaces concentriques (782) dépourvues de quartz taillées dans celui-ci et un miroir extérieur concentrique (780), ledit bloc de quartz étant disposé, par rapport à un trajet d'onde lumineuse prédéterminée d'une onde lumineuse orientée pour entrer dans ledit prisme de réception (106), de façon que l'onde lumineuse soit amenée, par un contact répété avec ledit photomultiplicateur (762), à se déployer, à être réfléchie et à se contracter.

12. Dispositif (100) selon la revendication 3, dans lequel ladite face (107c) dudit premier prisme (107) et une deuxième face (106c) dudit second prisme (106) sont espacées l'une de l'autre pour créer entre elles un milieu formant interface (114), ledit commutateur optique servant à provoquer une compression entre lesdites faces de façon que ledit milieu formant interface (114) soit sensiblement éliminé pour former une interface transparente entre lesdits premier et second prismes.

13. Dispositif (100) selon la revendication 12, comportant en outre un actionneur piézoélectrique (116) coopérant avec, au moins, un desdits premier et second prismes (107, 106) et servant à provoquer une compression entre lesdites faces (107c, 106c) de façon que ledit milieu formant interface (114) soit sensiblement éliminé pour former une interface transparente entre lesdits premier et second prismes (107, 106).

14. Dispositif (100) selon la revendication 12 ou 13, dans lequel ledit second prisme (106) est un prisme de réception (106) conçu pour recevoir dudit collecteur (541) une onde lumineuse concentrée, ledit prisme de réception (106) coopérant avec ledit commutateur optique de façon que ledit commutateur optique puisse être manoeuvré sélectivement pour amener une onde lumineuse reçue dans ledit prisme de réception (106) à passer à travers lesdites faces (107c, 106c) et à entrer dans ladite chambre de confinement (102).

15. Dispositif (100) selon la revendication, 12, 13 ou 14, dans lequel lesdites faces (107c, 106c) sont espacées l'une de l'autre de plus d'environ 1000 nanomètres dans ledit mode fermé et d'environ 0 à environ 50 nanomètres dans ledit mode ouvert.

16. Dispositif (100) selon l'une quelconque des revendications 12 à 15, dans lequel ledit milieu formant interface (114) a un indice de réfraction d'interface, et dans lequel ledit premier prisme (107) est un milieu optique ayant un premier indice de réfraction et ledit second prisme (106) est un milieu optique ayant un second indice de réfraction sensiblement similaire au premier indice de réfraction et sensiblement similaire à l'indice de réfraction du milieu formant interface (114).

17. Dispositif (100) selon la revendication 16, dans lequel ledit milieu formant interface (114) est un entrefer et lesdits premier et second indices de réfraction diffèrent de moins de 20 % l'un de l'autre.

18. Dispositif (100) selon la revendication 17, dans lequel lesdits premier et second prismes (107, 106) sont tous deux en matière sous forme de quartz.

19. Dispositif (100) selon la revendication 12, dans lequel lesdites première et second surfaces réfléchissantes et ladite face (107c) dudit premier prisme (107) sont situées et orientées pour définir, au moins partiellement, ledit trajet prédéterminé d'ondes lumineuses réfléchies dans ladite chambre de confinement (102).

20. Dispositif (100) selon la revendication 19, dans lequel lesdites première et seconde surfaces réfléchissantes sont disposées de façon qu'une onde lumineuse introduite dans ladite chambre de confinement (102) sous l'action dudit commutateur optique se propage sur ledit trajet prédéterminé d'ondes lumineuses réfléchies, ledit trajet d'ondes lumineuses étant orienté globalement à la perpendiculaire de chacune desdites première et seconde surfaces réfléchissantes.

21. Dispositif (100) selon la revendication 20, dans lequel, dans ledit mode ouvert, ladite face (107c) dudit premier prisme (107) est disposé de façon à amener une onde lumineuse à passer dudit second prisme (106) à ladite chambre de confinement (102) et, dans ledit mode fermé, à réfléchir en direction de ladite seconde surface réfléchissante, sur ledit trajet prédéterminé d'ondes lumineuses réfléchies, une onde lumineuse revenant de ladite première surface réfléchissante.

22. Dispositif (100) selon l'une quelconque des revendications 1 à 6 ou 19 à 21, comportant en outre un second miroir réfléchissant mobile (112) disposé à ladite seconde extrémité de ladite chambre de confinement (102), ledit second miroir réfléchissant (112) ayant ladite seconde surface réfléchissante.

**23.** Dispositif (100) selon l'une quelconque des revendications 1 à 6 ou selon la revendication 19, dans lequel ledit collecteur (541) comprend un miroir primaire (540) de collecteur ayant une surface parabolique conçue pour réfléchir et concentrer les ondes lumineuses collectées, un miroir secondaire (541) de collecteur disposé au-dessus dudit miroir primaire (541) de collecteur pour réfléchir des ondes lumineuses concentrées réfléchies depuis ladite surface parabolique dudit miroir primaire (541) de collecteur et réorienter les ondes lumineuses concentrées.

**24.** Dispositif (100) selon la revendication 23, comportant en outre un guide optique (545) disposé de façon à recevoir du miroir primaire (541) de collecteur l'onde lumineuse concentrée et à transmettre l'onde lumineuse concentrée vers ladite chambre de confinement (102).

FIG. 1

**FIG. 2**

**FIG. 5**

300 →

314

302

308

306c

306

307c

307

312

310

308

*FIG. 3*

y

z

AA  AA

106c

114

170

106

d

107

107c

*FIG. 1A*

y

z

AA

106c

114

107c

106

d'

107

AA'

*FIG. 1B*

406

A
y-axis
B
45°
C

+x-pol

*FIG. 4A*

406

A
y-axis
B
45°
C

+x-pol

*FIG. 4B*

FIG. 6A

FIG. 6B

FIG. 7A

FIG. 7E

FIG. 7F

780    706"    780

7C    7C

784

762    782    786    706'

*FIG. 7B*

Reflection    Contraction    Expasion

AA    AA    706"
762

Quartz    780

AA

Air

782    AA

*FIG. 7D*

FIG. 7C

FIG. 7G

FIG. 7H

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 39303 A
- GB 2276488 A

- US 3649105 A